# EUROPEAN PATENT SPECIFICATION

(11) **EP 2 893 721 B1**
(45) Date of publication and mention of the grant of the patent: **09.01.2019**
(21) Application number: 12759410.9
(22) Date of filing: 07.09.2012
(51) Int. Cl.: H04W 4/00, H04L 29/08, G08C 17/00, H04W 12/00, H04W 12/04, H04W 84/18, H04W 4/38

(54) **CONFIGURING A SENSOR DEVICE**
KONFIGURATION EINER SENSORVORRICHTUNG
CONFIGURATION D'UN DISPOSITIF DE DÉTECTION

(43) Date of publication of application: 15.07.2015
(73) Proprietor: Telefonaktiebolaget LM Ericsson (publ), 164 83 Stockholm (SE)
(72) Inventor: PIERREL, Sébastien, 172 32 Sundbyberg (SE); SAROS, Jakob, 171 67 Solna (SE)
(74) Representative: Brann AB
(86) International application number: PCT/EP2012/067514
(87) International publication number: WO 2014/037049

(56) References cited:
- WO-A2-2007/001629
- US-A1- 2004 266 449
- US-A1- 2010 283 584

## Description

### TECHNICAL FIELD

The invention relates to the configuring of a sensor device. More particularly, the invention relates to a sensor device for sensing and reporting a physical property, a method, computer and computer program product for configuring a sensor device for sensing and reporting a physical property, a configuring apparatus as well as a method, computer program and computer program code for providing a reporting configuration to a sensor device.

### BACKGROUND

Sensor devices are becoming increasingly interesting to use in a variety of environments such as in buildings.

A sensor device is then typically reporting data to a measurement data receiving entity. It is in this case often possible that the measurement data receiving entity is part of a wireless senor network,. The wireless sensor network may as an example be provided in the form of a Home Area Network (HAN). The sensor device then accesses and sends measurement data to the measurement data receiving entity via the wireless access point and perhaps also via the Internet.

Furthermore there may be a number of different wireless access points in such an environment, for instance one for every type of different type of wireless sensor network.

A sensor device may also need to be configured with communication settings in order to be able to communicate with one particular wireless sensor network and different entities within it.

These setting may be hard to provide beforehand, i.e. before the sensor device is deployed in the environment. They may thus need to be provided on site. The sensor device may thus need to be provided with communication settings as it is being placed in the environment in which it is to operate. If for instance an end-user purchases a new sensor device and installs it in his/her home, then there may be a need to configure the device before it becomes functional.

This may not be an easy task, since a sensor device is oftentimes only provided with only the most essential functionality, the functionality to sense a property and report it. There is thus often no user interface via which a user is able to configure the sensor device.

Sensor devices thus often lack a user interface (i.e. buttons, display, physical connector) to be configured, yet they require a configuration in order to become part of a network and/or for applications to read their measurements.

There is thus a need for being able to configure a sensor device with communication settings even though it lacks a user interface for configuring these settings.

Furthermore, even if the sensor device is provided with a user interface, it would require a number of user inputs for performing configuration. This is a tedious task, especially if there are several such sensor devices needing configuration. It would therefore be advantageous if also this situation could be improved upon.

There is thus a problem in that the configuring of a sensor device needs simplification. The present invention is directed towards this and other of the above-mentioned problems.

US Patent Publication 2004/266449 describes a secure credential infrastructure system to provision wireless sensors for secure communication.

### SUMMARY

One object of the invention is thus to enable a simpler configuring of a sensor device. The invention is disclosed in the appended claims.

This object is according to a first aspect achieved by a sensor device for sensing and reporting a physical property, where the sensor device comprises:
a sensing unit for measuring a physical property,
a measurement reporting unit that reports measurement data of the physical property to a measurement data receiving entity,
a data decoding unit that decodes network access data being coded into the measured physical property, where the network access data comprises access point accessing data, characterized in that the data decoding unit is configured to perform decoding based on detecting swift changes in the measured physical property, said swift changes in the measured physical property are related to abnormal operating ranges of the sensor device, which are not expected by the sensor device and a wireless communication unit that connects to a wireless access point of a sensor network using the access point accessing data.

This object is according to a second aspect achieved through a method of configuring a sensor device for reporting measurements of a physical property. The method is performed in the sensor device and comprises:
measuring a physical property,
decoding network access data being coded into the physical property, where the network access data comprises access point accessing data, characterized in that the decoding involves detecting swift changes in the measured physical property, said swift changes in the measured physical property are related to abnormal operating ranges of the sensor device, which are not expected by the sensor device and
connecting to a wireless access point of a sensor network using the access point accessing data.

The object is according to a third aspect also achieved through a computer program for configuring a sensor device for reporting a physical property. The computer program comprises computer program code which when run in the sensor device, causes the sensor device to:
obtain measurement data of a measured physical property,
decode network access data that is coded into the physical property, where the network access data comprises access point accessing data, characterized in that the sensor device is caused to decode based on detection of swift changes in the measured physical property, said swift changes in the measured physical property are related to abnormal operating ranges of the sensor device, which are not expected by the sensor device and connect to a wireless access point of a sensor network using the access point accessing data.

The object is according to a fourth aspect further achieved through a computer program product for configuring a sensor device for reporting a physical property. The computer program product is provided on a data carrier and comprises the computer program code of the third aspect.

The network access data may comprise registration node accessing data.

In an advantageous variation of the first aspect, the sensor device then also comprises a registration control unit that accesses a registration node of the sensor network using this registration node accessing data.

In a corresponding variation of the second aspect, the method then further comprises accessing a registration node of the sensor network (14) using the registration node accessing data.

The network access data may further comprise receiving node accessing data.

According to a further variation of the first aspect, the measurement reporting unit reports measurement data to a measurement receiving node of the sensor network using the receiving node accessing data, where this measurement receiving node is a measurement data receiving entity.

According to a corresponding variation of the second aspect, the method further comprises reporting measurement data of the detected physical property to a measurement receiving node of the sensor network using the receiving node accessing data.

According to yet another variation of the first aspect, the data decoding unit performs decoding based on detecting swift changes in the sensed physical property.

According to a corresponding variation of the second aspect, the step of decoding involves detecting swift changes in the sensed physical property.

The above mentioned object of simplifying configuration is according to a fifth aspect also achieved through a configuring apparatus comprising a configuration data memory with network access data comprising access point accessing data, a signal emitter, an actuator and a control unit. The control unit controls the actuator to vary a physical property of the signal emitter for modulating the network access data as a variation of the physical property. This is done in order for the network access data to be conveyed to a sensor device sensing the physical property for use in communication with a sensor network, wherein the variation of the physical property comprises swift variations of the physical property, and wherein the swift variations of the physical property are related to abnormal operating ranges of the sensor device, which are not expected by the sensor device. The network access data comprises access point accessing data.

The object is according to a sixth aspect also achieved through a method of providing a reporting configuration to a sensor device. The method is performed in a configuring apparatus and comprises varying a physical
property of a signal emitter for modulating network access data as a variation of the physical property. This is done in order for the network access data to be conveyed to a sensor device sensing the physical property for use in communication with a sensor network, wherein the variation of the physical property comprises swift variations of the physical property, and wherein the swift variations of the physical property are related to abnormal operating ranges of the sensor device, which are not expected by the sensor device, where the network access data comprises access point accessing data.

The object is according to a seventh aspect also achieved through a computer program for providing a reporting configuration to a sensor device. The computer program comprises computer program code which when run in a configuring apparatus causes the configuring apparatus to:
vary a physical property of a signal emitter for modulating network access data as a variation of the physical property. This is done in order for the network access data to be conveyed to a sensor device sensing the physical property for use in communication with a sensor network, wherein the variation of the physical property comprises swift variations of the physical property, and wherein the swift variations of the physical property are related to abnormal operating ranges of the sensor device, which are not expected by the sensor device. The network access data comprises access point accessing data.

The object is according to an eighth aspect further achieved through a computer program product for providing a reporting configuration to a sensor device. The computer program product is provided on a data carrier and comprises the computer program code of the seventh aspect.

According to an advantageous variation of the fifth, sixth, seventh and eighth aspects, the network access data comprises registration node accessing data.

According to another variation of the fifth, sixth, seventh and eighth aspects, the network access data further comprises receiving node accessing data.

According to yet another variation of fifth, sixth, seventh and eighth aspects, the network access data is modulated through swift changes in the physical property.

The invention according to the above-mentioned aspects has a number of advantages. It simplifies the configuring of a sensor device. The configuring can be performed with a minimum of user involvement. The configuration can furthermore be made on a sensor device irrespective of if it is equipped with a user interface or not. The sensor device can because of this also be provided in an economical way only including the most essential features.

It should be emphasized that the term "comprises/comprising" when use
d in this specification is taken to specify the presence of stated features, integers, steps or components, but does not preclude the presence or addition of one or more other features, integers, steps, components or groups thereof.

### BRIEF DESCRIPTION OF THE DRAWINGS

The invention will now be described in more detail in relation to the enclosed drawings, in which:
fig. 1 schematically shows a sensor device configuring apparatus and a sensor device in the vicinity of two different wireless sensor networks, each provided with a corresponding access point,
fig. 2 shows a block schematic of the sensor device, fig. 3 schematically shows the content of an access memory of the sensor device,
fig. 4 shows a block schematic of the sensor device configuring apparatus,
fig. 5 schematically shows a method step being performed by the sensor device configuring apparatus in a method of providing a reporting configuration according to a first embodiment of the invention,
fig. 6 schematically shows a number of method step being performed in the sensor device in a method for sensing and reporting a physical property according to the first embodiment of the invention,
fig. 7 shows one way of modulating data on a physical property,
fig. 8 schematically shows a number of method steps being performed by the sensor device configuring apparatus in a method of providing a reporting configuration according to a second embodiment of the invention,
fig. 9 shows a number of method step being performed in the sensor device in a method for sensing and reporting a physical property according to the second embodiment of the invention, and
fig. 10 schematically shows a computer program product in the form of a CD ROM disc with a computer program performing the functionality of various units of the sensor device and sensor device configuring apparatus.

### DETAILED DESCRIPTION

In the following description, for purposes of explanation and not limitation, specific details are set forth such as particular architectures, interfaces, techniques, etc. in order to provide a thorough understanding of the invention. However, it will be apparent to those skilled in the art that the invention may be practiced in other embodiments that depart from these specific details. In other instances, detailed descriptions of well-known devices, circuits and methods are omitted so as not to obscure the description of the invention with unnecessary detail.

The invention is generally directed towards a sensor device being associated with a wireless sensor network for reporting sensor data.

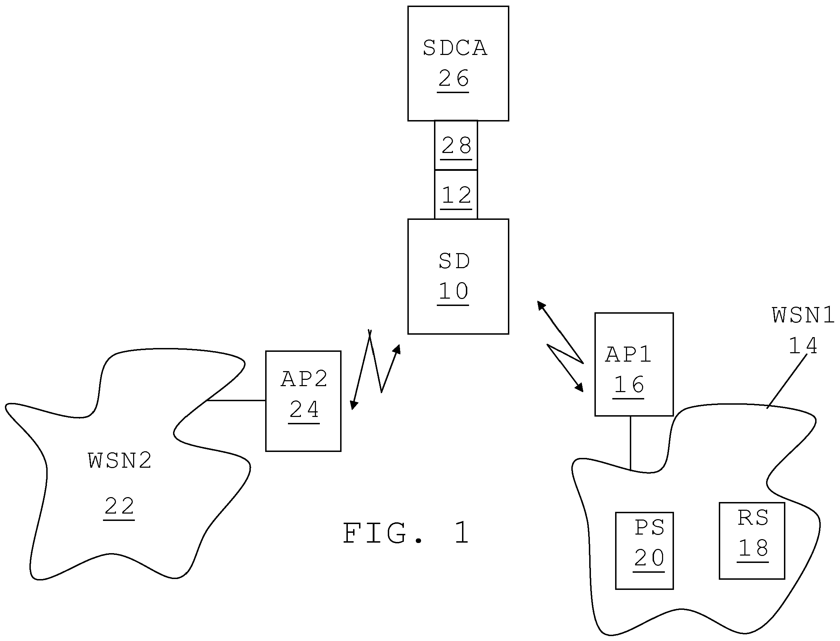

The sensor device is shown in fig. 1.

In fig. 1 there is furthermore shown the sensor device SD 10 having a sensing unit 12 for sensing a physical property. There is also a configuring arrangement for the sensor device, which is an arrangement provided for configuring the sensor device. The configuring arrangement is therefore in the following termed a sensor device configuring arrangement SDCA 26. The sensor device configuring arrangement 26 is provided with a signal emitter 28. The signal emitter 28 is in fig. 1 being placed so that it abuts or is in physical contact with the sensing unit 12. In the vicinity of the sensor device 10 there are furthermore a first and a second access point AP1 16 and AP2 24, which are wireless access points associated with a first and a second wireless sensor network WSN1 14 and WSN2 22.

The first sensor network 14 includes a number of devices with which the sensor device may communicate. There is here shown a first device in the form of a registration server 18 and a second device in the form of a publication server 20. It should be realized that this two servers 18 and 20 may be provided far away from the sensor device 10. They are thus not necessarily provided in the vicinity of the sensor device 10. The registration server 18 is an entity that is a registration node in the first sensor network 14 and the publication server 20 a measurement receiving node in the first wireless sensor network 14, i.e. a node which receives sensor measurements from the sensor device 10. The publication server 20 is also a measurement data receiving entity, i.e. an entity in the first sensor network 14 that receives measurement data from the sensor device 10. These are mere examples of some of the entities existing in a sensor network with which the sensor device may need to communicate. It should be realized that the first wireless sensor network 14 may include several more and other entities with which the sensor device 10 may communicate. It should also be realized that the first wireless access point 16 may also employ another computer communication network for connecting to the two devices 18 and 20. One example of such a network is the Internet. For this reason there may also be a gateway provided in the first wireless sensor network 14. Such a gateway may with advantage be combined with the first wireless access point 16. Such a gateway may also or instead be combined with the registration server 18 and/or with the publication server 20.

It should be realized that also the second wireless sensor network 22 may comprise entities with which a sensor device may communicate. However, this network 22 will in the following exemplify a network with which the sensor device 10 is not supposed to communicate. Consequently possible entities of this network 22 have been omitted in order to provide a clearer description of variations of the invention.

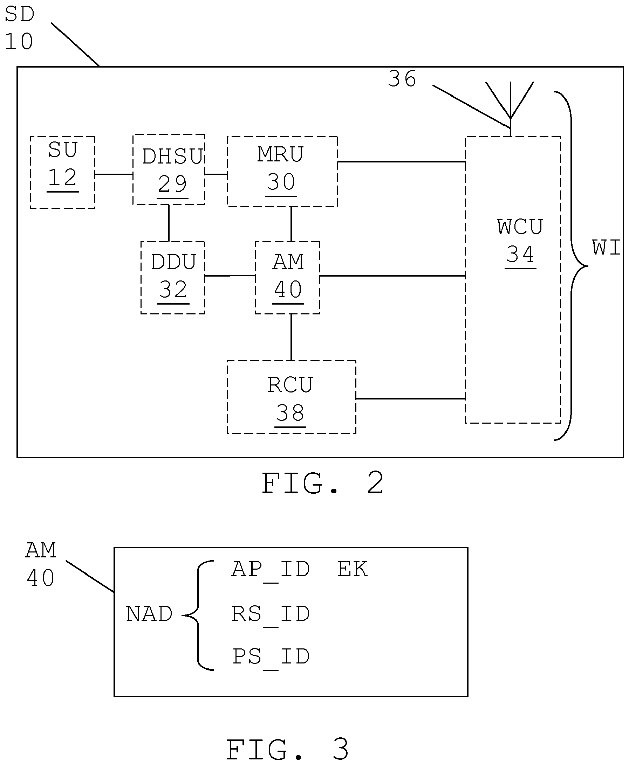

Fig. 2 shows a block schematic of the sensor device SD 10. It comprises the previously described sensing unit SU 12. The sensing unit 12 is connected to a measurement reporting unit MRU 30 and to a data decoding unit DDU 32 via an optional data handling selecting unit DHSU 29. The measurement reporting unit 30 is connected to a wireless communication unit WCU 34. There is also a registration control unit RCU 38, which is connected to the wireless communication unit 34. Also the registration control unit 38 is optional. There is also an access memory AM 40, which is connected to the measurement reporting unit 30, the data decoding unit 32, the registration control unit 38 and to the wireless communication unit 34. Also the access memory 40 is optional. The wireless communication unit 34 is finally connected to an antenna 36 and forms a wireless interface WI together with this antenna 36.

The wireless communication unit 34 may be a circuit configured for communication according to a communication standard such as Bluetooth, IEEE 802.11 or IEEE 802.15.4.

Fig. 3 schematically shows exemplifying content of the access memory AM 40. The memory comprises Network Access Data NAD, i.e. data used for accessing a wireless sensor network and entities in this wireless sensor network. The Network Access Data in the example of fig. 3 comprises an Access Point IDentifier AP_ID, an associated Encryption Key EK, a Registration Server IDentifier RS_ID and a Publication Server IDentifier PS_ID. The access point identifier AP_ID is access point accessing data, i.e. data for accessing and access point and may be an identifier used for identifying a wireless access point, and in this example the first wireless access point 16, may as an example be a service set identifier (SSID) or a personal area network identifier (PAN ID) of this access point, while the encryption key EK may be an encryption key used for encrypting communication with this access point.

Continuing with the example of the first wireless sensor network 14, the registration server identifier RS_ID is registration node accessing data and may be an identifier associated with the registration server 18. It may be a Uniform Resource Locator (URL) of this server 18. However, it may as an alternative also be an Internet Protocol (IP) Address. The publication server identifier PS_ID is receiving node accessing data, i.e. data used for accessing a node in a wireless network that is to receive measurement data. The publication server identifier PS_ID may be an identifier associated with the publication server 20. Also this identifier may be provided as a URL or an IP Address of the publication server 20. It should furthermore be realized that in some variations of the invention there is no publication server and thus also no publication server identifier. It is also possible that the encryption key EK and in fact also the registration server identifier RS_IFD may be omitted.

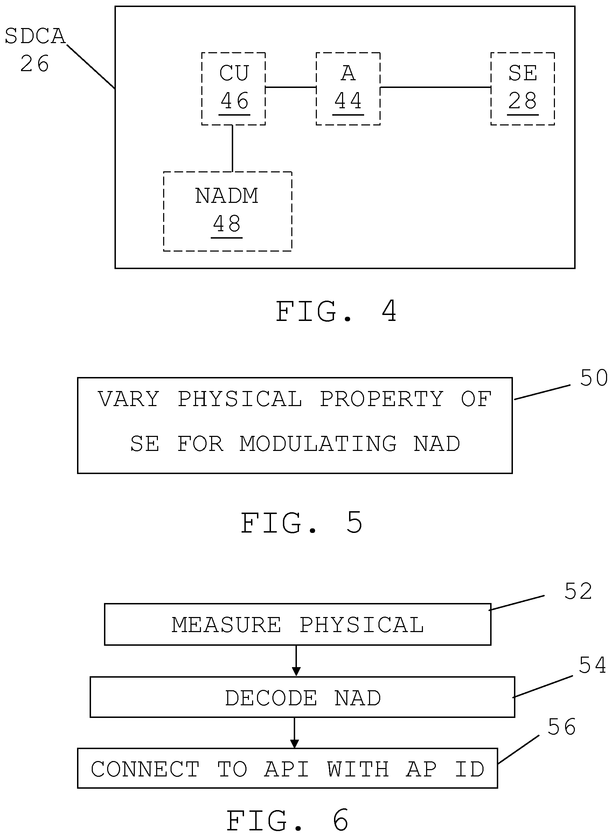

Fig. 4 shows a block schematic of the sensor device configuring apparatus 26. It comprises the previously mentioned signal emitter SE 28, which is connected to an actuator A 44. The actuator 44 is in turn connected to a control unit CU 46, which is connected to a network access data memory NADM 48. The network access data memory 48 typically comprises network access data that needs to be transferred to the sensor device. Therefore this data may comprise the same network access data that the access memory comprises, i.e. the network access data memory 48 may comprise the access point identifier AP_ID, the encryption key EK, the registration server identifier RS_ID and publication server identifier PS_ID. Since the content is often the same, there is no separate drawing showing the content of the network access data memory 48.

The sensor device 10 may be placed in a building, such as an office building or an apartment building. In this environment there may be a number of different wireless networks existing at the time of deployment. The environment may for instance comprise the first and second wireless sensor networks 14 and 22.

A sensor device of the type in fig. 2 being placed in an environment will typically need to join a wireless network, like a Home Area Network (HAN), where such a network can be based on a wide variety of wireless technologies. It is for instance foreseen that in a multi-tenancy building there will exists a multitude of different sensor devices as well as access points that connect to these devices much like an apartment building where every apartment sets up its own wireless network using different access points. One or more of these wireless network may furthermore employ the Internet and therefore they may also comprise a gateway handling communications.

When a new sensor device is to be added to an existing network, for instance when an end-user purchases a new sensor device and installs it in his/her home, i.e. when the sensor device first is installed by a consumer or technician, there may be a need to configure the sensor device before it becomes functional. Such configuration may include:
An identifier of the wireless access point Address of a gateway, if a gateway is included in the network,
An identifier identifying where measurement data is to be provided, such as an identifier of local data storage on the gateway (mirror proxy),
An identifier of a Resource directory for finding information about resources connected to the network

The local data storage may in the following be exemplified by the publication server 20 and the resource directory by the registration server 18. Both these units may be provided as a part of the above-mentioned gateway. It is also possible that a resource directory is provided for communication with entities via the Internet, in which case also an identifier of such an external server may be needed. However, they may also be provided as separate entities, as is indicated in fig. 1

Sensor devices often lack a user interface (i.e. buttons, display, physical connector) to be configured, yet they require a configuration in order to become part of a network and/or for allowing applications to read their measurements. They may also lack hardware interfaces for connection to external memories like various types of data carriers, such as memory sticks or CD ROMs. The exemplifying sensor device in fig. 2 is a sensor device lacking both these interfaces.

One issue when connecting a new sensor device to a wireless sensor network is that it should not connect to any available network. For instance, it must be ensured that a sensor device that belongs to a particular end-user does not connect to a network of his or her neighbour.

This means that it is hard to configure the sensor devices for being connected to a wireless sensor network when there is no user interface.

Variations of the invention are based on the concept to use the capability of a sensor to measure its environment, i.e. to measure the physical property it is intended to sense, for obtaining the configuration it needs. This may be done through a coding of the data as a variation of the physical property that the sensor device is provided for sensing. If the physical property is temperature, this coding may as an example be performed by encoding digital information over the variation of the temperature in time. The coding may thus be provided through influencing the physical property to provide distinctive variations over time.

A first embodiment will now be described with reference being made also to fig. 5 and 6, where fig. 5 schematically shows a method step being performed by the sensor device configuring apparatus 26 in a method of providing a reporting configuration and fig. 6 schematically shows a number of method step being performed in the sensor device 10 in a method for sensing and reporting a physical property.

As the sensor device 10 is brought into a new environment for being used in this environment, for instance as it is brought into a building like an apartment or an office building, it may need to be configured to be operative in this environment. In this case the access memory 40 may be empty or comprise insufficient amount of network access data. As a variation of the latter scenario it may already comprise a registration server identifier and a publication server identifier, but lack an access point identifier and encryption key.

As the sensor device 10 may be provided without a user interface, these settings may be hard to convey to the sensor device 10.

The environment may, as was mentioned earlier, comprise the first and second access points 16 and 24 for allowing connection to the first and second wireless sensor networks 14 and 22. However, the intention of a user may be that the sensor device is only to communicate with the first wireless sensor network 14. This may be hard to accomplish if there are many wireless networks in the area. There is thus a problem in how the sensor device 10 will receive the configuration for connecting to the desired wireless sensor network.

Because of this the sensor device 10 may need to receive a configuration for this communication. A user may for this reason bring the sensor device configuring apparatus 26 to the vicinity of the sensor device 10. The apparatus 26 may thus be brought in proximity of the sensor device 10. It may more particularly be brought close enough for the signal emitter 28 to distinctively influence the physical property being sensed by the sensor unit 12 for variations in the measured physical property not being possible to consider to be normal variations in the environment. The sensor device configuring apparatus 26 may as an example be brought so that the signal emitter 28 is in physical contact with or abuts the sensing unit 12.

As the signal emitter 28 is brought to the sensing unit 12 of the sensing device 10, the control unit 46 of the sensor device configuring apparatus 26 then controls the actuator 44 to vary the physical property of the signal emitter 28 for modulating network access data NAD as a variation of the physical property, step 50, in order to be conveyed to the sensor device 10. The variation may comprise swift variations of the physical property, such as variations between two threshold levels, a low and a high threshold level. The variation may be swift in that the time that that the value of the property is above the high level and the time it is below the low threshold is longer than the time in which it transitions between the two thresholds.

The network access data NAD here comprises at least access point accessing data, which is here in the form of the access point identifier AP_ID.

In this first embodiment, the data handling selecting unit 29 is not used. Therefore, the sensing unit 12 of the sensor device 12 measures the physical property T, step 52, and forwards measurements of the physical property to the data decoding unit 32, which in turn decodes the network access data NAD being coded into the physical property T, step 54. The network access data NAD comprises at least the access point identifier AP_ID. The data decoding unit 32 may more particularly decode the network access data NAD based on the swift changes of the physical property. Once the network access data NAD has been decoded, it is provided for use in communication with the first wireless sensor network 14. It may here be forwarded from the data decoding unit 32 to the access memory 40. Thereafter it is possible for the wireless communication unit 34 to connect to the access memory 40 and obtain the access point identifier AP_ID and connect to the first access point 16 using this access point identifier of the first wireless sensor network 14, step 56. As an alternative it is possible that the data decoding unit 32 directly sends the various pieces of network access data to the units that need them. It is for instance possible that the data decoding unit 32 sends the access point identifier AP_ID directly to the wireless communication unit 34.

Thereafter it is possible for the sensor device 10 to communicate with the first wireless sensor network 14. It can in this way be seen that it is possible to obtain the configuration data for the sensor device 10 even though no user interface is provided. The configuration data can thus be provided to a sensing device that senses a physical property independently of if it has a user interface or not. The configuration data is furthermore conveyed in a user-friendly way. A user does not have to perform any complicated activities. It is sufficient that the sensor device configuration arrangement 26 is brought with the signal emitter 28 close to, i.e. adjacent, or in physical contact with the sensing unit 12 of the sensor device 10 in order to transfer configuration data to the sensor device 10.

It can thus be seen that the arrangement is used to apply variations of the physical property in a pattern recognizable by a sensor device. The pattern may thus be predefined by a sensor device manufacturer and defined in such a way that a normal measurement of the physical property cannot produce the same measurements.

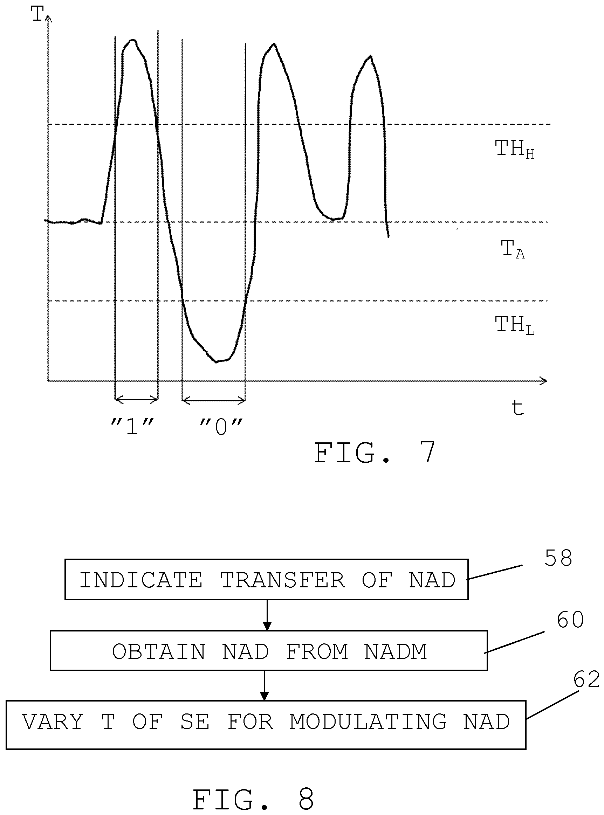

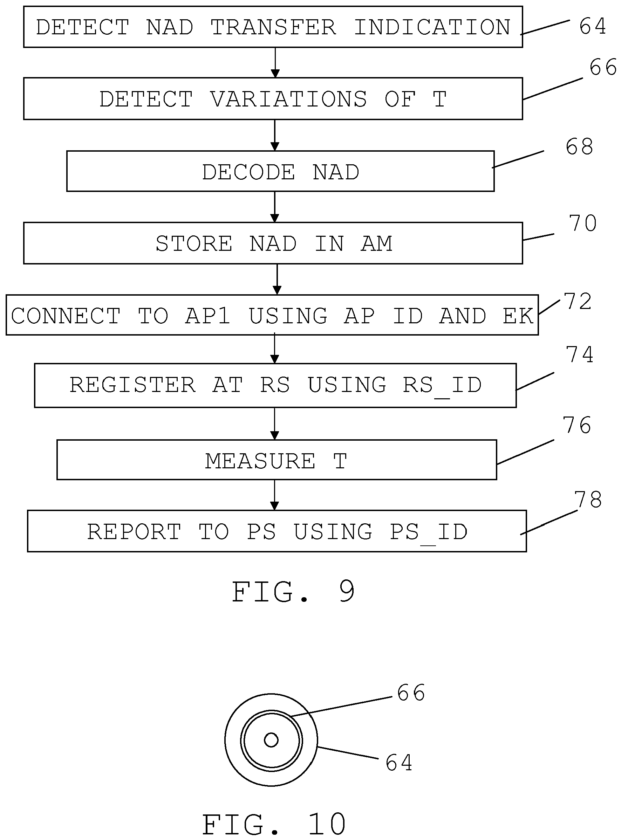

Now a second embodiment will be described with reference being made to the previously described fig. 1 - 4 as well as to fig. 7, 8 and 9, where fig. 7 shows one way of modulating data on a physical property, fig. 8 schematically shows a number of method steps being performed by the sensor device configuring apparatus in a method of providing a reporting configuration and fig. 9 shows a number of method step being performed in the sensor device in a method for sensing and reporting a physical property.

As an example the physical property being varied is the property of temperature. The variation may be provided through giving the signal emitter 28 of the arrangement 26 a temperature that varies form above a high threshold TH_{H} to below a low threshold, TH_{L}. These two levels may be set symmetrically around a "normal" ambient temperature level T_{A}. The high level threshold TH_{H} may thus be considerably higher than the normal ambient temperature T_{A} and the low threshold TH_{L} may be considerably lower than the normal ambient temperature T_{A}. The high threshold TH_{H} may for instance be set to be more than two times the normal variations of the ambient temperature T_{A} and the low threshold TH_{L} may be set to be more than two times lower than the normal variations. The thresholds may also be set to be more than three, four or five times higher and lower than the normal variations of the physical property in the environment of the sensor device.

If the normal ambient temperature is the room temperature of for instance 22°C with a normal variation of ±5°C then the high level threshold may as an example be set at 42°C and the low threshold may set at 2°C.

The data is then modulated onto the physical property of temperature T through rapidly changing temperature T, i.e. through providing quick temperature changes from above the high threshold TH_{H} to below the low threshold TH_{L} and vice versa in order to provide a train of digital bits. It should here be realized that it is possible with other types of coding. Data can for instance be coded through using the rising and falling edges of the temperature instead.

A swift change may furthermore involve the temperature T changing from being above the high threshold TH_{H} to being below the low threshold TH_{L} faster than the time that it remains above or below the high and the low thresholds TH_{H} and TH_{H}.

In the example of fig. 7 a temperature above the high threshold signifies one logical state, in this case a "1" and a temperature below the low threshold signifies an opposite logical state, such as "0". It should be realized that the high level may as alternative be considered to be a"0" and the low level a "1".

When the physical property is the temperature T, the signal emitter 28 may be provided in the form of one or more emitting elements, where an emitting element may be an element with a high thermal conductivity, for instance a metal. The actuator may in this case comprise at least one emitter actuating element, i.e. at least one element that actuates a corresponding emitter element. One type of actuating element may comprise a container of a gas such as propane, which is supplied to a blowtorch that heats the emitter element to above the high threshold, while another type of actuator may comprise a container of dry ice being supplied to the emitter element for lowering the temperature. It is also possible with two emitter elements, where one is kept at the high temperature and the other at the low temperature. In order to modulate data it is then possible to switch between the two emitter elements being in contact with the sensing unit 12 of the sensing device 10. In this case the actuator 44 may comprise a switching unit for switching between the two emitter elements.

Now as the sensor device 10 is to be configured for use, a user brings the signal emitter 28 adjacent the sensing unit 12 of the sensor device 10, for instance through bringing it in physical contact with the sensing unit 12. Thereby the sensing unit 12 will, when sensing the physical property T, sense the property provided by the arrangement 26.

It is here possible that the sensor device 10 is first notified of an imminent transfer of configuration data. The signal emitter 28 may thus provide an indication of a transfer of network access data NAD, step 58. This may be done through the control unit 46 controlling the actuator 44 to provide an abnormal physical property value level for a certain duration, for instance a level that deviates from the ambient property levels normally expected by the sensor device 10. The level may as an example be two, three, four or five times higher or lower than the normal level. The control unit 46 may furthermore cause the actuator 44 to keep the signal emitter 28 at the level for a fairly long time, such as 5 seconds, and then bring the signal emitter 28 back to a normal ambient temperature level.

The sensing unit 12 of the sensor device 10 thus measures the temperature T and may then forward the measurements to the data handling selecting unit 29, which if detecting that the measured property is at an abnormal level for a prolonged time, may determine that an indication is transmitted, step 64. This may be used for keeping the sensor device attentive to the transmission of configuration data. This may more particularity be used for making sure that ensuing measurements are to be provided to the data decoding unit 32 instead of to the measurement reporting unit 30.

Thereafter the control unit 46 of the arrangement 26 obtains the network access data NAD from the network access data memory 48, step 60, and thereafter modulates the data on the physical property. This is in this example done through varying the temperature T of the signal emitter 28 for modulating the network access data, step 62. This is in this example done through the actuator 44 causing the temperature T of the signal emitter 28 to vary between the high and the low thresholds TH_{H} and TH_{L} in a sequence for modulating data bits corresponding to the data in the memory 48 on the physical property. In this example the network access data NAD is a reporting configuration for the sensor device, i.e. is a configuration with settings relating to reporting of sensor measurements, and comprises the access point identifier AP_ID, the encryption key EK, the registration server identifier RS_ID and the publication server identifier PS_ID are being modulated onto the temperature T of the signal emitter 28 and transferred to the sensing unit 12.

The temperature T with variations are then detected by the sensing unit 12, step 66, and the temperature measurements are then sent to the data handling selecting unit 29, which forwards them to the data decoding unit 32. The data decoding unit 32 compares the measured levels with thresholds and detects which signal states have been received based on these comparisons. In this way the network access data NAD is decoded, step 68. The data decoding unit 32 then stores the network access data in the access memory 40, step 70, so that it can be used in accessing the first wireless sensor network 14.

It can here furthermore be mentioned that it is possible to provide an end of configuration data transfer indication, i.e. an indication that there is no more network configuration data being conveyed. This end of configuration data transfer indication may be provided in the same way as the data transfer indication. This indicator may be used to signal to the data handling selecting unit 29 the fact that following measurements are to be handled as normal sensor measurements by the measurement reporting unit 30. As an alternative it is possible to use a timer for determining that there is no configuration data. The timer may be reset each time a piece of configuration data is detected and compared with a timer value. If the timer value is exceeded then an end of transfer is assumed. All sensor measurements received by the data handling selecting unit 29 after the end of transfer of network configuring data are thus to be forwarded to the measurement reporting unit 30.

The wireless communication unit 34 may now fetch the access point identifier AP_ID and the encryption key EK from the access memory 40 and use for connecting to the wireless sensor network that the sensor device is to be a part of. When scanning the vicinity of available wireless networks, the wireless communication unit 34 may now detect both the first and the second access points 16 and 24. However, since it has the access point identifier AP_ID, which in this example is the access point identifier of the first access point 16, it can easily connect to the correct access network. The wireless communication unit thus connects to the first access point 16 using the access point identifier AP_ID and possibly also encryption key EK stored in the access memory 40, step 72.

After this has been done it is then possible for the register control unit 38 to register itself as a new element of the first wireless sensor network at the registration server 18 using the registration server identifier RS_ID, step 74. The registration control unit 38 may for this reason fetch the registration server identifier RS_ID from the access memory 40 and access the registration server 18 via the wireless interface using the identifier RS_ID. It may thereafter register the sensor device 10 at the registration server 18 as a sensor device of the first wireless sensor network 14. Through this registering it is then possible for entities of the first wireless sensor network 14 that are interested in obtaining measurement data with sensor measurements to find out about the existence of the sensor device 10.

It is also possible that the sensor device 10 posts or publishes measurements for other entities that are interested in them. The sensor device 10 may thus publish measurements at the publication server 20.

Therefore the measurement reporting unit 30 may receive measurement data from the sensing unit 12 and report these to the publication server, step 78. This reporting, which is done via the wireless interface WI, may then be made using the publication server identifier PS_ID in order to connect to the publication server 20. It is also possible that an entity interested in the sensor measurements queries the sensor device about measurement data and receives such measurement data as a response. Such a query may then be handled by the measurement reporting unit 30. It is can thus be seen that the measurement reporting unit 30 reports measurement data of the physical property to a measurement data receiving entity.

It can be seen that the sensor device has been configured for connecting to the wireless access point of the wireless sensor network to which it is to be added. It has furthermore also connected to servers of the wireless sensor network that handle various communication functions in the wireless sensor network. Thereby it is possible for the sensing device to both provide measurements to entities requesting data, which entities may discover the existence of the sensing device via the registration server, as well as to publish data via the publication server. This configuration has furthermore been performed in a simple and user friendly way with a minimum of user interaction, without having to rely on a user interface. The configuration is thus possible to provide to a sensor device that lacks user interface. The sensor device can because of this also be provided in an economical way only including the most essential features. Superfluous functionality may thus be omitted.

There are many possible variations that may be made to the invention. As mentioned above it is possible to provide also a sensor device that has a user interface with network configuration data in the above-described way. The configuration is in this case simplified in that the user need not perform any entries, but just to hold the arrangement close to the sensor device, which may be advantageous if many sensor devices are to be configured. Furthermore, the invention was above described in relation to the physical property of temperature. The invention is in no way limited to this specific type of physical property. The invention can for instance also be applied on sound, light, pressure and humidity, fluid flow etc. It should also be realized that the invention can also be used for updating the configuration of a sensor device.+

The units of the sensor device, perhaps except for the wireless radio communication unit and sensor unit, may be provided in the form of a processor with associated program memory including computer program code for performing the functionality of its units. These units may also be provided in the form of a digital signal processor (DSP). Also the control unit of the sensor device configuring arrangement may be provided in this way.

A computer program may also be a computer program product, for instance in the form of a computer readable storage medium or data carrier, like a CD ROM disc or a memory stick, carrying such a computer program with the computer program code, which will implement the functionality of the above-described sensor device or sensor device configuring arrangement when being loaded into a processor. One such computer program product in the form of a CD ROM disc 64 with the above-mentioned computer program code 66 is schematically shown in fig. 10.

While the invention has been described in connection with what is presently considered to be most practical and preferred embodiments, it is to be understood that the invention is not to be limited to the disclosed embodiments, but on the contrary, is intended to cover various modifications and equivalent arrangements. Therefore the invention is only to be limited by the following claims.

## Claims

1. A sensor device (10) for sensing and reporting a physical property (T), the sensor device (10) comprising:
a sensing unit (12) for measuring the physical property (T),
a measurement reporting unit (30) configured to report measurement data of the physical property (T) to a measurement data receiving entity of a sensor network (14);
a data decoding unit (32) configured to decode network access data (NAD) being coded into the measured physical property (T), said network access data comprising access point accessing data (AP ID), and a wireless communication unit (34) configured to connect to a wireless access point (16) of the wireless sensor network (14) by using said access point data;
**characterized in that** the data decoding unit (32) is configured to perform decoding based on detecting swift changes in the measured physical property (T), said swift changes in the measured physical property (T) are related to an abnormal physical property (T) level for a certain duration, which deviates from physical property (T) levels normally expected by the sensor device (10).

2. The sensor device (10) according to claim 1, wherein the network access data further comprises registration node accessing data (RS ID) and the sensor device (10) further comprises a registration control unit (38) configured to access a registration node (18) of the sensor network (14) using said registration node accessing data.

3. The sensor device (10) according to claim 1 or 2, wherein the network access data further comprises receiving node accessing data (PS ID) and the measurement reporting unit (30) is configured to report the measurement data to a measurement receiving node (20) of the sensor network (14) using said receiving node accessing data, said measurement receiving node (20) being the measurement data receiving entity.

4. A method of configuring a sensor device (10) for reporting measurements of a physical property (T), the method being performed in the sensor device (10) and comprising the steps of:
measuring (52; 66) the physical property (T),
decoding (54; 68) network access data (NAD) being coded into the measured physical property (T), said network access data comprising access point accessing data (AP ID), and connecting (56; 72) to a wireless access point (16) of a sensor network (14) by using said access point accessing data; **characterized in that**
the decoding (54; 68) involves detecting swift changes in the measured physical property (T), said swift changes in the measured physical property (T) are related to an abnormal physical property (T) level for a certain duration, which deviates from physical property (T) levels normally expected by the sensor device (10).

5. The method according to claim 4, wherein the network access data comprises registration node accessing data (RS ID) and receiving node accessing data (PS ID), and the method further comprises accessing (74) a registration node (18) of the sensor network (14) using said registration node accessing data and reporting measurement data of the physical property (T) to a measurement receiving node (20) of the sensor network (14) using said receiving node accessing data.

6. A computer program for configuring a sensor device (10) for reporting a physical property (T) and comprising computer program code (66) which when run in the sensor device (10), causes the sensor device (10) to:
obtain measurement data of a measured physical property (T),
decode network access data (NAD) being coded into the measured physical property (T), said network access data comprising access point accessing data (AP ID), and connect to a wireless access point (16) of a sensor network (14) by using said access point accessing data;
**characterized in that** the
sensor device (10) is caused to decode based on detection of swift changes in the measured physical property (T), said swift changes in the measured physical property (T) are related to an abnormal physical property (T) level for a certain duration, which deviates from physical property (T) levels normally expected by the sensor device (10).

7. A computer program product for configuring a sensor device (10) for reporting a physical property (T), said computer program product being provided on a data carrier (64) and comprising said computer program code (66) according to claim 6.

8. A configuring apparatus (26) comprising:
a configuration data memory (48) with network access data (NAD) comprising access point accessing data (AP ID),
a signal emitter (28), and
an actuator (44),
a control unit (46) configured to control the actuator (44) to vary a physical property (T) of the signal emitter (28) for modulating the network access data (NAD) as a variation of the physical
property (T), in order to be conveyed to a sensor device (10) for use in communication with a sensor network (14), **characterised in that** the variation of the physical property (T) comprises swift variations of the physical property (T), wherein the swift variations of the physical property (T) are related to an abnormal physical property (T) level for a certain duration, which deviates from physical property (T) levels normally expected by the sensor device (10).

9. The configuring apparatus (26) according to claim 8, wherein the network access data further comprises registration node accessing data (RS ID) and receiving node accessing data (PS ID).

10. The configuring apparatus (26) according to any of claims 8-9, wherein the network access data is modulated through the swift variations of the physical property (T).

11. A method of providing a reporting configuration to a sensor device (10), the method being performed in a configuring apparatus (26) varying (50; 62) a physical property (T) of a signal emitter (28) for modulating network access data (NAD) as a variation of the physical property (T), in order to be conveyed to the sensor device (10) for use in communication with a sensor network (14), **characterised in that** the variation of the physical property (T) comprises swift variations of the physical property (T), wherein the swift variations of the physical property (T) are related to an abnormal physical property (T) level for a certain duration, which deviates from physical property (T) levels normally expected by the sensor device (10).

12. The method according to claim 11, wherein the network access data comprises access point accessing data (AP ID), registration node accessing data (RS ID), and receiving node accessing data (PS ID).

13. The method according to any of claims 11-12, wherein the network access data is modulated through the swift variations of the physical property (T).

14. A computer program for providing a reporting configuration to a sensor device (10), wherein the computer program comprising computer program code (66) which when run in a configuring apparatus (26), causes the configuring apparatus (26) to: vary a physical property (T) of a signal emitter (28) for modulating network access data (NAD) as a variation of the physical property (T), in order to be conveyed to the sensor device (10) for use in communication with a sensor network (14), **characterised in that** the variation of the physical property (T) comprises swift variations of the physical property (T), wherein the swift variations of the physical property (T) are related to an abnormal physical property (T) level for a certain duration, which deviates from physical property (T) levels normally expected by the sensor device (10).

15. A computer program product for providing a reporting configuration to a sensor device (10), said computer program product being provided on a data carrier (64) and comprising said computer program code (66) according to claim 14.

## Patentansprüche

1. Sensorvorrichtung (10) zum Erfassen und Melden einer physikalischen Eigenschaft (T), wobei die Sensorvorrichtung (10) Folgendes umfasst:
eine Erfassungseinheit (12) zum Messen der physikalischen Eigenschaft (T),
eine Messwertmeldeeinheit (30), die dazu konfiguriert ist, Messdaten der physikalischen Eigenschaft (T) an eine Messdatenempfangsentität eines Sensornetzwerks (14) zu melden;
eine Datendecodiereinheit (32), die dazu konfiguriert ist, Netzwerkzugangsdaten (NZD) zu decodieren, die in der gemessenen physikalischen Eigenschaft (T) codiert sind, wobei die Netzwerkzugriffsdaten Zugriffspunktzugriffsdaten (AP ID) umfassen, und
eine drahtlose Kommunikationseinheit (34), die dazu konfiguriert ist, sich unter Verwendung der Zugriffspunktdaten mit einem drahtlosen Zugriffspunkt (16) des drahtlosen Sensornetzwerks (14) zu verbinden;
**dadurch gekennzeichnet, dass** die Datendecodiereinheit (32) dazu konfiguriert ist, ein Dekodieren basierend auf einem Detektieren von raschen Veränderungen der gemessenen physikalischen Eigenschaft (T) durchzuführen, wobei die raschen Veränderungen der gemessenen physikalischen Eigenschaft (T) sich auf ein anormales Niveau der physikalischen Eigenschaft (T) über eine bestimmte Dauer beziehen, das von Niveaus der physikalischen Eigenschaft (T), die üblicherweise von der Sensorvorrichtung (10) erwartet werden, abweicht.

2. Sensorvorrichtung (10) nach Anspruch 1, wobei die Netzwerkzugriffsdaten ferner Registrationsknotenzugriffsdaten (RS ID) umfassen und die Sensorvorrichtung (10) ferner eine Registrationssteuereinheit (38) umfasst, die dazu konfiguriert ist, unter Verwendung der Registrationsknotenzugriffsdaten auf einen Registrationsknoten (18) des Sensornetzwerks (14) zuzugreifen.

3. Sensorvorrichtung (10) nach Anspruch 1 oder 2, wobei die Netzwerkzugriffsdaten ferner Empfangsknotenzugriffsdaten (PS ID) umfassen und die Messwertmeldeeinheit (30) dazu konfiguriert ist, die Messdaten unter Verwendung der Empfangsknotenzugriffsdaten an einen Messwertempfangsknoten (20) des Sensornetzwerks (14) zu melden, wobei der Messwertempfangsknoten (20) die Messdatenempfangsentität ist.

4. Verfahren zum Konfigurieren einer Sensorvorrichtung (10) zum Melden von Messwerten einer physikalischen Eigenschaft (T), wobei das Verfahren in der Sensorvorrichtung (10) durchgeführt wird und die Folgenden Schritte umfasst:
Messen (52; 66) der physikalischen Eigenschaft (T), Decodieren (54; 68) von Netzwerkzugriffsdaten (NZD), die in der gemessenen physikalischen Eigenschaft (T) codiert sind,
wobei die Netzwerkzugriffsdaten Zugriffspunktzugriffsdaten (AP ID) umfassen, und
Verbinden (56; 72) mit einem drahtlosen Zugriffspunkt (16) eines Sensornetzwerks (14) unter Verwendung der Zugriffspunktzugriffsdaten;
**dadurch gekennzeichnet, dass**
das Decodieren (54; 68) ein Detektieren von raschen Veränderungen der gemessenen physikalischen Eigenschaft (T) beinhaltet, wobei die raschen Veränderungen der gemessenen physikalischen Eigenschaft (T) auf ein anormales Niveau einer physikalischen Eigenschaft (T) über eine bestimmte Dauer bezogen sind, das von Niveaus der physikalischen Eigenschaft (T), die üblicherweise von der Sensorvorrichtung (10) erwartet werden, abweicht.

5. Verfahren nach Anspruch 4, wobei die Netzwerkzugriffsdaten Registrationsknotenzugriffsdaten (RS ID) und Empfangsknotenzugriffsdaten (PS ID) umfassen, und wobei das Verfahren ferner ein Zugreifen (74) auf einen Registrationsknoten (18) des Sensornetzwerks (14) unter Verwendung der Registrationsknotenzugriffsdaten und ein Melden von Messdaten der physikalischen Eigenschaft (T) an einen Messwertempfangsknoten (20) des Sensornetzwerks (14) unter Verwendung der Empfangsknotenzugriffsdaten umfasst.

6. Computerprogramm zur Konfiguration einer Sensorvorrichtung (10) zum Melden einer physikalischen Eigenschaft (T) und umfassend einen Computerprogrammcode (66), der, wenn er in der Sensorvorrichtung (10) läuft, die Sensorvorrichtung (10) zu Folgendem veranlasst:
Erhalten von Messdaten einer gemessenen physikalischen Eigenschaft (T),
Decodieren von Netzwerkzugriffsdaten (NZD), die in der gemessenen physikalischen Eigenschaft (T) codiert sind, wobei die Netzwerkzugriffsdaten Zugriffspunktzugriffsdaten (AP ID) umfassen, und
Verbinden mit einem drahtlosen Zugriffspunkt (16) des Sensornetzwerks (14) unter Verwendung der Zugriffspunktzugriffsdaten;
**dadurch gekennzeichnet, dass** die
Sensorvorrichtung (10) veranlasst wird, basierend auf einer Detektion von raschen Veränderungen der gemessenen physikalischen Eigenschaft (T) zu dekodieren, wobei die raschen Veränderungen der gemessenen physikalischen Eigenschaft (T) sich auf ein anormales Niveau der physikalischen Eigenschaft (T) über eine bestimmte Dauer beziehen, das von den Niveaus der physikalischen Eigenschaft (T), die üblicherweise von der Sensorvorrichtung (10) erwartet werden, abweicht.

7. Computerprogrammprodukt zur Konfiguration einer Sensorvorrichtung (10) zum Melden einer physikalischen Eigenschaft (T), wobei das Computerprogrammprodukt auf einem Datenträger (64) bereitgestellt ist und den Computerprogrammcode (66) nach Anspruch 6 umfasst.

8. Konfigurationseinrichtung (26), die Folgendes umfasst:
einen Konfigurationsdatenspeicher (48) mit Netzwerkzugriffsdaten (NZD), die Zugriffspunktzugriffsdaten (AP ID) umfassen,
einen Signalsender (28), und
einen Aktuator (44),
eine Steuereinheit (46), die dazu konfiguriert ist, den Aktuator (44) zu steuern, um eine physikalische Eigenschaft (T) des Signalsenders (28) zu variieren, um die Netzwerkzugriffsdaten (NZD) als eine Variation der physikalischen Eigenschaft (T) zu modulieren, um an eine Sensorvorrichtung (10) zur Verwendung in einer Kommunikation mit einem Sensornetzwerk (14) übermittelt zu werden,
**dadurch gekennzeichnet, dass** die Variation der physikalischen Eigenschaft (T) rasche Variationen der physikalischen Eigenschaft (T) umfasst, wobei die raschen Variationen der physikalischen Eigenschaft (T) sich auf ein anormales Niveau der physikalischen Eigenschaft (T) über eine bestimmte Dauer beziehen, das von Niveaus der physikalischen Eigenschaft (T), die üblicherweise von der Sensorvorrichtung (10) erwartet werden, abweicht.

9. Konfigurationseinrichtung (26) nach Anspruch 8, wobei die Netzwerkzugriffsdaten ferner Registrationsknotenzugriffsdaten (RS ID) und Empfangsknotenzugriffsdaten (PS ID) umfassen.

10. Konfigurationseinrichtung (26) nach einem der Ansprüche 8-9, wobei die Netzwerkzugriffsdaten durch die raschen Variationen der physikalischen Eigenschaft (T) moduliert werden.

11. Verfahren zum Bereitstellen einer Meldekonfiguration an eine Sensorvorrichtung (10), wobei das Verfahren in einer Konfigurationseinrichtung (26) durchgeführt wird,
Variieren (50; 62) einer physikalischen Eigenschaft (T) eines Signalsenders (28) zum Modulieren von Netzwerkzugriffsdaten (NZD) als eine Variation der physikalischen Eigenschaft (T), um an die Sensorvorrichtung (10) zur Verwendung in einer Kommunikation mit einem Sensornetzwerk (14) übermittelt zu werden, **dadurch gekennzeichnet, dass** die Variation der physikalischen Eigenschaft (T) rasche Variationen der physikalischen Eigenschaft (T) umfasst, wobei die raschen Variationen der physikalischen Eigenschaft (T) sich auf ein anormales Niveau der physikalischen Eigenschaft (T) über eine bestimmte Dauer beziehen, das von Niveaus der physikalischen Eigenschaft (T), die üblicherweise von der Sensorvorrichtung (10) erwartet werden, abweicht.

12. Verfahren nach Anspruch 11, wobei die Netzwerkzugriffsdaten Zugriffspunktzugriffsdaten (AP ID), Registrationsknotenzugriffsdaten (RS ID) und Empfangsknotenzugriffsdaten (PS ID) umfassen.

13. Verfahren nach einem der Ansprüche 11-12, wobei die Netzwerkzugriffsdaten durch die raschen Variationen der physikalischen Eigenschaft (T) moduliert werden.

14. Computerprogramm zum Bereitstellen einer Meldekonfiguration an eine Sensorvorrichtung (10), wobei das Computerprogramm einen Computerprogrammcode (66) umfasst, der, wenn er in einer Konfigurationseinrichtung (26) läuft, die Konfigurationseinrichtung (26) zu Folgendem veranlasst:
Variieren einer physikalischen Eigenschaft (T) eines Signalsenders (28) zum Modulieren von Netzwerkzugriffsdaten (NZD) als eine Variation der physikalischen Eigenschaft (T), um an die Sensorvorrichtung (10) zur Verwendung in einer Kommunikation mit einem Sensornetzwerk (14) übermittelt zu werden, **dadurch gekennzeichnet, dass** die Variation der physikalischen Eigenschaft (T) rasche Variationen der physikalischen Eigenschaft (T) umfasst, wobei die raschen Variationen der physikalischen Eigenschaft (T) sich auf ein anormales Niveau der physikalischen Eigenschaft (T) über eine bestimmte Dauer beziehen, das von Niveaus der physikalischen Eigenschaft (T), die üblicherweise von der Sensorvorrichtung (10) erwartet werden, abweicht.

15. Computerprogrammprodukt zum Bereitstellen einer Meldekonfiguration an eine Sensorvorrichtung (10), wobei das Computerprogrammprodukt auf einem Datenträger (64) bereitgestellt ist und den Computerprogrammcode (66) nach Anspruch 14 umfasst.

## Revendications

1. Dispositif de détection (10) pour détecter et rapporter une propriété physique (T), le dispositif de détection (10) comprenant :
une unité de détection (12) pour mesurer la propriété physique (T),
une unité de rapport de mesure (30) configurée pour rapporter des données de mesure de la propriété physique (T) à une entité de réception de données de mesure d'un réseau de capteurs (14) ;
une unité de décodage de données (32) configurée pour décoder des données d'accès à un réseau (NAD) étant codées dans la propriété physique mesurée (T), lesdites données d'accès à un réseau comprenant des données d'accès à un point d'accès (AP ID) ; et
une unité de communication sans fil (34) configurée pour se connecter à un point d'accès sans fil (16) du réseau de capteurs sans fil (14) à l'aide desdites données de point d'accès ;
**caractérisé en ce que** l'unité de décodage de données (32) est configurée pour réaliser un décodage sur la base d'une détection de changements rapides de la propriété physique mesurée (T), lesdits changements rapides de la propriété physique mesurée (T) sont relatifs à un niveau anormal de propriété physique (T) pendant une certaine durée, lequel s'écarte de niveaux de propriété physique (T) normalement attendus par le dispositif de détection (10).

2. Dispositif de détection (10) selon la revendication 1, dans lequel les données d'accès à un réseau comprennent en outre des données d'accès à un noeud d'enregistrement (RS ID) et le dispositif de détection (10) comprend en outre une unité de commande d'enregistrement (38) configurée pour accéder à un noeud d'enregistrement (18) du réseau de capteurs (14) à l'aide desdites données d'accès à un noeud d'enregistrement.

3. Dispositif de détection (10) selon la revendication 1 ou 2, dans lequel les données d'accès à un réseau comprennent en outre des données d'accès à un noeud de réception (PS ID) et l'unité de rapport de mesure (30) est configurée pour rapporter les données de mesure à un noeud de réception de mesure (20) du réseau de capteurs (14) à l'aide desdites données d'accès à un noeud de réception, ledit noeud de réception de mesure (20) étant l'entité de réception de données de mesure.

4. Procédé de configuration d'un dispositif de détection (10) pour rapporter des mesures d'une propriété physique (T), le procédé étant réalisé dans le dispositif de détection (10) et comprenant les étapes de :
mesure (52 ; 66) de la propriété physique (T),
décodage (54 ; 68) de données d'accès à un réseau (NAD) étant codées dans la propriété physique mesurée (T), lesdites données d'accès à un réseau comprenant des données d'accès à un point d'accès (AP ID), et
connexion (56 ; 72) à un point d'accès sans fil (16) d'un réseau de capteurs (14) à l'aide desdites données d'accès à un point d'accès ;
**caractérisé en ce que**
le décodage (54 ; 68) implique la détection de changements rapides de la propriété physique mesurée (T), lesdits changements rapides de la propriété physique mesurée (T) sont relatifs à un niveau anormal de propriété physique (T) pendant une certaine durée, lequel s'écarte de niveaux de propriété physique (T) normalement attendus par le dispositif de détection (10).

5. Procédé selon la revendication 4, dans lequel les données d'accès à un réseau comprennent des données d'accès à un noeud d'enregistrement (RS ID) et des données d'accès à un noeud de réception (PS ID), et le procédé comprend en outre l'accès (74) à un noeud d'enregistrement (18) du réseau de capteurs (14) à l'aide desdites données d'accès à un noeud d'enregistrement et le rapport de données de mesure de la propriété physique (T) à un noeud de réception de mesure (20) du réseau de capteurs (14) à l'aide desdites données d'accès à un noeud de réception.

6. Programme d'ordinateur pour configurer un dispositif de détection (10) pour rapporter une propriété physique (T) et comprenant un code de programme d'ordinateur (66) qui ; lorsqu'il se déroule dans le dispositif de détection (10), amène le dispositif de détection (10) à :
obtenir des données de mesure d'une propriété physique mesurée (T),
décoder des données d'accès à un réseau (NAD) étant codées dans la propriété physique mesurée (T), lesdites données d'accès à un réseau comprenant des données d'accès à un point d'accès (AP ID), et
se connecter à un point d'accès sans fil (16) d'un réseau de capteurs (14) à l'aide desdites données d'accès à un point d'accès ;
**caractérisé en ce que** le dispositif de détection (10) est amené à décoder sur la base d'une détection de changements rapides dans la propriété physique mesurée (T), lesdits changements rapides dans la propriété physique mesurée (T) sont relatifs à un niveau anormal de propriété physique (T) pendant une certaine durée, lequel s'écarte de niveaux de propriété physique (T) normalement attendus par le dispositif de détection (10).

7. Produit-programme d'ordinateur pour configurer un dispositif de détection (10) pour rapporter une propriété physique (T), ledit produit-programme d'ordinateur étant disposé sur un support de données (64) et comprenant ledit code de programme d'ordinateur (66) selon la revendication 6.

8. Appareil de configuration (26) comprenant :
une mémoire de configuration de données (48) avec des données d'accès à un réseau (NAD) comprenant des données d'accès à un point d'accès (AP ID),
un émetteur de signaux (28), et
un actionneur (44),
une unité de commande (46) configurée pour commander l'actionneur (44) pour faire varier une propriété physique (T) de l'émetteur de signaux (28) pour moduler les données d'accès à un réseau (NAD) en tant que variation de la propriété physique (T), afin de les acheminer à un dispositif de détection (10) à utiliser en communication avec un réseau de capteurs (14), **caractérisé en ce que**
la variation de la propriété physique (T) comprend des variations rapides de la propriété physique (T), dans lequel les variations rapides de la propriété physique (T) sont relatives à un niveau anormal de propriété physique (T) pendant une certaine durée, lequel s'écarte de niveaux de propriété physique (T) normalement attendus par le dispositif de détection (10).

9. Appareil de configuration (26) selon la revendication 8, dans lequel les données d'accès à un réseau comprennent en outre des données d'accès à un noeud d'enregistrement (RS ID) et des données d'accès à un noeud de réception (PS ID).

10. Appareil de configuration (26) selon l'une quelconque des revendications 8 à 9, dans lequel les données d'accès à un réseau sont modulées par le biais des variations rapides de la propriété physique (T).

11. Procédé de fourniture d'une configuration de rapport à un dispositif de détection (10), le procédé étant réalisé dans un appareil de configuration (26) faisant varier (50 ; 62) une propriété physique (T) d'un émetteur de signaux (28) pour moduler des données d'accès à un réseau (NAD) en tant que variation de la propriété physique (T), afin de les acheminer au dispositif de détection (10) à utiliser en communication avec un réseau de capteurs (14), **caractérisé en ce que** la variation de la propriété physique (T) comprend des variations rapides de la propriété physique (T), dans lequel les variations rapides de la propriété physique (T) sont relatives à un niveau anormal de propriété physique (T) pendant une certaine durée, lequel s'écarte de niveaux de propriété physique (T) normalement attendus par le de détection (10).

12. Procédé selon la revendication 11, dans lequel les données d'accès à un réseau comprennent des données d'accès à un point d'accès (AP ID), des données d'accès à un noeud d'enregistrement (RS ID) et des données d'accès à un noeud de réception (PS ID).

13. Procédé selon l'une quelconque des revendications 11 à 12, dans lequel les données d'accès à un réseau sont modulées par le biais des variations rapides de la propriété physique (T).

14. Programme d'ordinateur pour fournir une configuration de rapport à un dispositif de détection (10), dans lequel le programme d'ordinateur comprend un code de programme d'ordinateur (66) qui, lorsqu'il se déroule dans un appareil de configuration (26), amène un appareil de configuration (26) à : faire varier une propriété physique (T) d'un émetteur de signaux (28) pour moduler des données d'accès à un réseau (NAD) en tant que variation de la propriété physique (T), afin de les acheminer au dispositif de détection (10) à utiliser en communication avec un réseau de capteurs (14), **caractérisé en ce que**
la variation de la propriété physique (T) comprend des variations rapides de la propriété physique (T), dans lequel les variations rapides de la propriété physique (T) sont relatives à un niveau anormal de propriété physique (T) pendant une certaine durée, lequel s'écarte de niveaux de propriété physique (T) normalement attendus par le dispositif de détection (10).

15. Produit-programme d'ordinateur pour fournir une configuration de rapport à un dispositif de détection (10), ledit produit-programme d'ordinateur étant disposé sur un support de données (64) et comprenant ledit code de programme d'ordinateur (66) selon la revendication 14.
